# EUROPEAN PATENT APPLICATION

(11) **EP 4 843 752 A1**
(43) Date of publication of application: **25.11.2026**
(21) Application number: 25315171.6
(22) Date of filing: 20.05.2025
(51) Int. Cl.: B29C 64/124, B29C 64/245, B29D 11/00, B33Y 10/00, B33Y 30/00, B33Y 80/00

(54) **ADDITIVE MANUFACTURING SYSTEM AND METHOD FOR ADDITIVELY MANUFACTURING AN OBJECT**

(71) Applicant: Essilor International, 94220 Charenton-Le-Pont (FR)
(72) Inventor: Ben Cheikh, Ilhem, 94000 CRETEIL (FR); Huprel, Laurent, 94140 ALFORTVILLE (FR)
(74) Representative: Korakis-Ménager, Sophie

(57) **Abstract**

Additive manufacturing system and method for manufacturing an object. The object comprises a preform (401) and a complement (501). The additive manufacturing system comprises a plurality of actuators (101), the actuators being configured to move so that the preform (401) is held by the actuators (101) during the manufacturing of the complement (501). The additive manufacturing system also comprises a manufacturing module (102) configured to create layers of the complement starting from a surface of the preform.

## Description

### Technical field

This disclosure relates to additive manufacturing system and method for additively manufacturing an object.

### Background information and prior art

Additive manufacturing is a technique for fabricating different types of objects. In embodiments, these objects may be parts of eyeglasses, for example, lenses.

The object may be constituted of a preform and a complement. During additive manufacturing, the complement is fabricated from a material that will be deposited over the preform to create layers of the object. The first layer may be deposed on the preform and the successive layers may be deposed on previously manufactured layer or on the preform. In other words, the object is manufactured at least partially in a layer-by-layer manner.

The preform may have a complex shape for example with a cantilevered part. This complex shape renders the preform difficult to rest on a flat surface. Furthermore during the manufacturing of the object, one may need to move the preform.

There is a need for an additive manufacturing system and an associated method for additively manufacturing an object, allowing the manufacturing of objects and not having the drawbacks presented previously.

### Summary

**The** following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is an additive manufacturing system for manufacturing an object. The object comprises a preform and a complement. The additive manufacturing system comprises a plurality of actuators, the actuators being configured to move so that the preform is held by the actuators during the manufacturing of the complement. The additive manufacturing system also comprises a manufacturing module configured to create layers of the complement starting from a surface of the preform.

This additive manufacturing system allows the use of any type of preform more precisely of any type of shapes (concave, convex, spherical, toric, complex, etc.) and sizes more precisely of any diameters for circular preform.

This additive manufacturing system also allows the adjustment of the position and orientation (inclination) of the preform during the manufacturing of the object to optimize this manufacturing and to minimize printing time. Indeed, each layer is printed with an orientation optimized according to the preform and the complement. This allows maximizing the volume to be printed per layer. As a result, the number of layers is reduced. This additive manufacturing system also reduces the firing distance (by firing distance, one means the distance between the print head and the surface where the liquid material is deposited i.e. the distance that each drop will travel to arrive on the preform surface), and achieves more easily the complement by focusing on key areas of the preform to optimize print quality, especially for complex surfaces.

One of the benefits of the actuators of the manufacturing system is to avoid any mechanical constraints on the preform (which would induce mechanical deformations on the preform) compared to other edge-holding systems, such as clamps.

Another aspect of this disclosure is an optical article. The optical article comprises a preform and a complement. The optical article is manufactured by placing the preform over actuators, adjusting a position of the actuators to hold the preform, creating layers by layers the complement over the preform.

Another aspect of this disclosure is an eyewear. The eyewear comprises an optical article. The optical article comprises a preform and a complement. The optical article is manufactured by placing the preform over actuators, adjusting a position of the actuators to hold the preform, creating layers by layers the complement over the preform.

Another aspect of this disclosure is a method for additively manufacturing an object. The object is formed of a preform and a complement. The method comprises: placing a preform over actuators, adjusting a position of the actuators to hold the preform, creating layers by layers the complement over the preform.

A computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for additively manufacturing an object. The object is formed of a preform and a complement. The method comprises: placing a preform over actuators, adjusting a position of the actuators to hold the preform, creating layers by layers the complement over the preform.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents an additive manufacturing system.
Figure 2 represents an example of the actuators.
Figure 3 represents a method to additive manufacturing of an object comprising a preform and a complement.
Figure 4 represents different orientations of the preform.
Figure 5-a to 5-c represent two ways of using the additive manufacturing system.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the additive manufacturing system

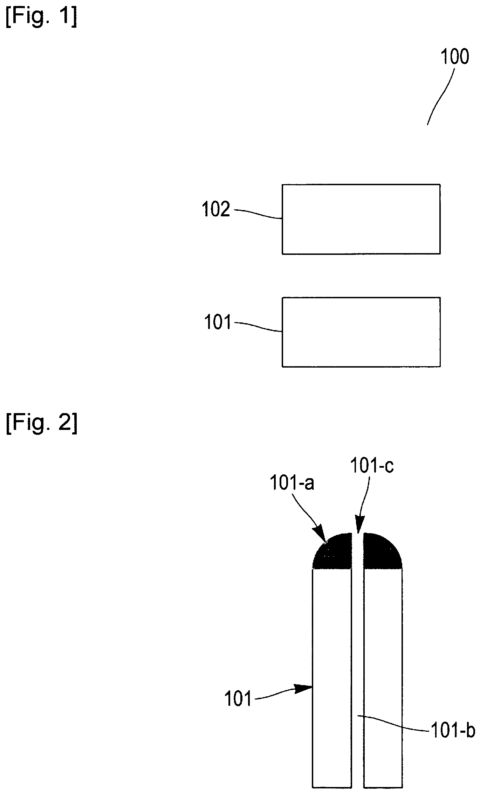

The figure 1 represents an additive manufacturing system 100. The additive manufacturing system 100 may be configured to manufacture an object. The object comprises a preform and a complement. The additive manufacturing system 100 may comprise:
- a plurality of actuators 101, the actuators being configured to move so that the preform is held by the actuators during the manufacturing of the complement and
- a manufacturing module 102 configured to create layers of the complement starting from a first surface of the preform.

The actuators 101 may be located under the preform, so that the preform rests on the actuators and a second surface in contact with the actuators may be opposite to the first surface.

The system may be configured to arrange the actuators 101 at different heights so as to conform to a shape of the second surface of the preform 401. The system may be configured to arrange the actuators 101 to modify an orientation of the preform 401, for example between the manufacturing of two different layers.

The initial layer realized when manufacturing the preform 401 may not necessarily conforms to an external contour of the object, but may have a shape that conforms with least one further layers deposited on the initial layer. These further layers may be deposited with a different orientation of the preform 401.

The additive manufacturing system 100 may comprise between 3 and 2200 actuators 101. The additive manufacturing system 100 may comprise between 0.0004 and 1 actuator 101 per cm². These numbers of actuators or these concentrations of actuators are advantageous for a lens with a diameter of 100mm.

The object may be an optical article for example a lens. The preform may be a preform lens, the complement may allow a personalization of a correction of the preform lens to a wearer. In other words, the preform lens refers to a lens-shaped optical preform, intended to serve as an intermediate object in the manufacturing of a final optical article. The preform lens comprises at least part of the optical power or geometry of the final optical article and is configured to receive the complement, which allows for the personalization or adjustment of the optical correction to the specific needs of a wearer and/or the adjustment of the shape of the final optical article.

The additive manufacturing system 100 may be configured to manufacture the lens. The optical article may be part of an eyewear. Eyewear encompasses any type of head mountable devices designed to be worn in or in front at least one eye of a wearer, in any suitable form factor.

Eyewear includes head-mounted display devices (e.g. near eye display devices, augmented reality devices, virtual reality devices or mixed reality devices), helmets (with a visor), eyeglasses, googles, masks, visors, contact lenses, intraocular implants.

When the object is the lens, it is possible to use the preform as a substrate and to use the complement to add the refraction of the lens, or to add a further refraction to a preform having already a refraction.

The preform may be a film. The film may be a thermo-formed film with a specific curvature. The preform may be realized by molding or by additive manufacturing.

The actuators 101 have the advantage of keeping the preform immobile compared to flat trays that hold the pieces by vacuum. The movement of the actuators 101 allows them to adapt to any shape of the preform more precisely to curved preform. By shape of the preform one means a diameter of the preform, curvatures of the preform, the contours of the preform (for example when the shape of the preform is adapted to a shape of frame). The movement of the actuators 101 also allows the additive manufacturing system 100 to adapt to any type of preforms.

By additive manufacturing system one means a manufacturing system as defined in the international standard ASTM 2792-12, which mentions a process of joining materials to make objects from 3D model data, usually layer upon layer, as opposed to subtractive manufacturing methodologies, such as traditional machining. In general, for the following disclosure, the wording "create layers of an object" corresponds and applies to additive manufacturing techniques which builds an object by forming elements, voxels, droplets or layers, having a thickness smaller than the object to manufacture, including continuous stereolithography or 3D printing using printing heads.

The actuators 101 may move independently of each other, during the manufacturing of the complement, so that the movement of the preform is less limited.

The actuators 101 may move between the manufacturing of two successive layers of the complement.

The actuators 101 may move such that a distance between the manufacturing module 102 and a surface where the layer is created remains controlled.

The surface where the layer is created may be the surface of the preform or a surface of the previously created layer of the complement.

For each actuator 101, an end of the actuator 101 is in contact with the second surface of the preform and the end of the actuator 101 may be configured to hold a part of the second surface of the preform. The part of the second surface of the preform may be in the vicinity of the end of the actuator.

The actuators 101 may also be configured to release the part of the second surface of the preform.

As represented in figure 2, the end of the actuators 101 may comprise a seal 101-a and the actuators 101 may comprise a conduit 101-b , the seal 101-a and the conduit 101-b may form a vacuum hole 101-c and be configured together to generate a depression, the depression may allow the holding, by the actuator 101, of the part of the second surface of the preform in the vicinity of the end of the actuator 101. The depression allows to securely hold the preform. The depression may be created by a depression module fluidically connected to the vacuum hole 101-c, such as a vacuum pump, a Venturi device, or any other suitable source of negative pressure.

The conduit 101-b may be a longitudinal hole.

In some embodiments, it is possible to deactivate the depression, of one or several of the actuators 101, before moving the actuators 101 and reactivate the depression once the movement is done. It allows to more easily move the preform, for example to change the orientation of the preform.

The orientation may change from a first orientation to a second orientation. This change of orientation may occur during manufacturing or only once before manufacturing. In the case where the orientation is changed before manufacturing, it may be advantageous to initially place the preform in a position that is easy to reach by an operator. The preform may then be moved to adopt a second orientation suitable for the manufacturing of the complement. Modifying the orientation before manufacturing may also be useful to facilitate automatic detection or inspection of the preform, to optimize alignment with handling systems, or to allow for pre-conditioning steps (such as heating or cleaning) to be performed more effectively.

A plurality of additive manufacturing methods exists among them one may find stereolithography, mask stereolithography or mask projection stereolithography, material jetting (for example polymer jetting), 3D inkjet, Scanning Laser Sintering (SLS), Scanning Laser Melting (SLM), Fused Deposition Modeling (FDM).

The manufacturing module 102 may be configured to dispense a liquid material and to solidify the liquid material to form the layers of the object. The liquid material may be dispensed in the form of droplets or voxels.

The liquid material may be a UV-curable liquid material. The manufacturing module 102 may comprise a jetting head configured to dispense the UV-curable liquid material. The manufacturing module 102 may comprise a UV light configured to cure the UV-curable liquid material.

In embodiments, the different layers may be realized by polymerization of a liquid. This polymerization may be realized for example using UV light and/or heat.

The manufacturing module 102 may be configured to dispense a liquid material and to solidify the liquid material to form the layers of the object. The manufacturing module 102 may comprise a jetting head configured to dispense the liquid material.

In embodiments, the liquid material may be a UV-curable liquid material. The manufacturing module 102 may comprise a UV light configured to cure the UV-curable liquid material. In other words, in these embodiments a layer of the liquid may be jetted on the build platform 101 and then the liquid may be polymerized to create a layer of the complement. Once this layer is created, a further layer of liquid is jetted on the previously created layer and polymerized to create a further layer of the complement. These embodiments are also known as material jetting (for example polymer jetting), or 3D inkjet.

The manufacturing module 102 may comprise other types of curing units and dispensing units, for example:
- Use of a material dispenser and a LED bar or a DLP projector: in that case, the curing selectivity is done by the image projection (LED bar or DLP).
- Use a printhead to jet the liquid material and LED bar or DLP for curing the liquid material.
- If thick layers are realized, use of a dispenser such as syringes and LED bar or DLP for curing the liquid material. By thick layers one means layers thicker than 100µm.

When FDM is used, the material used to create the complement is solid at ambient temperature and becomes liquid when heated. In this case, the manufacturing module may be configured to heat the material, thereby rendering it liquid before applying a layer of the material to form a layer of the preform. The material then naturally solidifies when cooled.

In embodiments, stereolithography (SLA) may be used. In this case, the UV-curable liquid material may be placed in a receptacle. The bottom of the receptacle may comprise the actuators 101, and the preform may be held by the actuators 101. The manufacturing module 102 may comprise a UV light source configured to cure the UV-curable liquid material, more precisely the top layer of the UV-curable liquid material. Once a layer of the complement is formed, the preform 401 may be lowered by the actuators 101. The UV-curable liquid material then fills the gap created, and the manufacturing module 102 may cure a subsequent layer of the UV-curable liquid material to form a further layer of the complement.

The additive manufacturing system 100 may also comprise a control module for controlling the movements of the actuators 101 and for controlling the manufacturing module 102. The aim of these controls may be to create layers of the complement.

The control module may comprise a memory and a processor.

The control module may be a low resource calculation module.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory may be computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the control module.

As explained previously, the additive manufacturing system 100 may be configured to move some actuators 101 independently of the others during the manufacturing of the object.

The complement may be manufactured part by part, for example layer by layer, and the additive manufacturing system is configured to move the actuators 101 between the manufacturing of two successive layers.

The additive manufacturing system 100 may be configured to move the actuators 101 such that a distance between the manufacturing module 102 and a surface where the layer is created remains constant. This is particularly useful when used in material jetting (for example polymer jetting), or 3D inkjet, the droplets jetted by the manufacturing module 102 may be rather close to the part being built as the firing distance is typically in the mm range (around 1 mm for droplet of 6 picoliters (pl) of volume). By firing distance, one means the distance between the print head and the surface where the liquid material is deposited, i.e. the distance that each drop will travel to arrive on the preform surface. This surface is usually the surface of the preform or the previous layer. That means that the actuators 101 should be able to move the preform during the printing process in order to be versatile enough to produce the entire product range.

By remains constant one means that the distance is within a range close to a predetermined distance. The variation gap may permit the drop formation and avoid undesirable satellites. By satellites, one means droplets that either detach from a main droplet of liquid material due to their small size and the force of the air drifting them away from the jetting axis or parasitic droplets that are ejected from the nozzles after the main droplet.

Using the additive manufacturing system 101 one may manufacture transparent objects, for example parts of eyeglasses or ophthalmic lenses.

An object for example an ophthalmic lens may be considered as transparent when the observation of an image through this object is perceived without significant loss of contrast. Stated otherwise, the inter-position of a transparent object between an image and an observer of the latter does not significantly reduce the quality of the image.

The actuators 101 may be moved using motors and screws, piezo actuators, fluid pressure.

The wettability between the preform and the liquid material is also an important criterion for material jetting (for example polymer jetting), or 3D inkjet technology where the printed drops advantageously form a homogeneous layer to avoid optical and cosmetic defaults.

### Description of the method for additively manufacturing the object

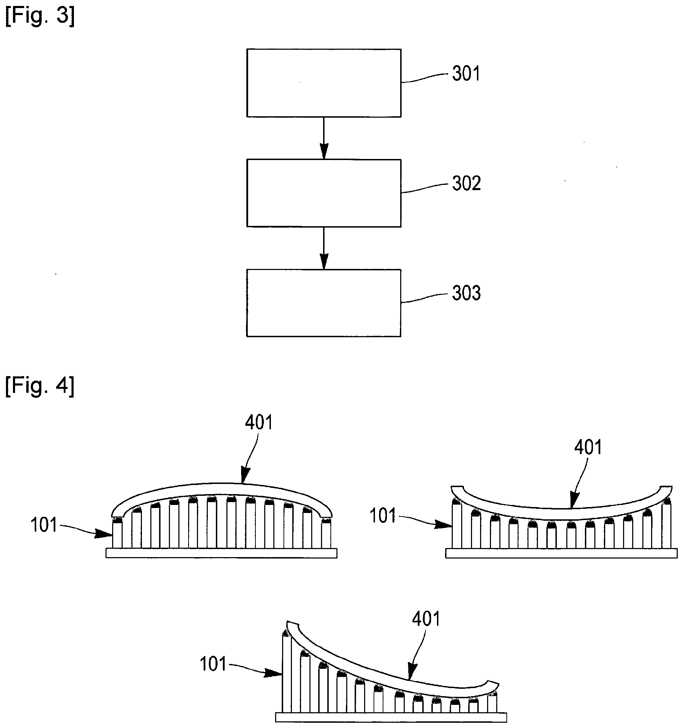

The figure 3 represents the steps of a method for additively manufacturing the object. This method may be realized by the system 100 of the figure 1.

The method comprises:
- a step 301 of placing a preform over actuators 101,
- a step 302 of adjusting a position of the actuators 101 to hold the preform 401,
- a step 303 of creating layers by layers the complement 501 over the preform 401,
the object being formed of the preform 401 and the complement 501.

The step 302 of adjusting a position of the actuators 101 may be realized without deformation of the preform and without applying mechanical constraints to the preform.

In other words, the figure 3 represents a method for additively manufacturing the object formed of the preform and the complement. The method comprises moving the actuators 101 toward initial positions to support the preform and creating successive layers of the complement. The method also comprises modifying the position of the actuators between each layer so that the position of the preform comprising the already manufactured layers of the complement is adapted to the layer of the complement to be manufactured.

To realize the additive manufacturing of the object, the memory of the control module may store a computer program comprising instructions which, when the program is executed by the processor, cause the control module to command the additive manufacturing system 100 to realize the method of the figure 3.

Each layer may partially be printed or deposited on a previously manufactured layer, and/or may partially be laid on the preform.

The step 303 of creating layers by layers the complement over the preform is realized by the manufacturing module 102.

In the case where one manufactures the concave side of the lens first, meaning the concave side is formed by the preform, the first layers will be composed of hollowed circles or rings and at each step, the points corresponding to the turned-on pixels of the display will be moved relatively.

In other words, the movement of the actuators 101 may depend on the progress of the manufacturing.

The figure 4 represents different orientations of the preform 401. These different orientations are obtained thanks to the movement of the actuators 101.

Each actuator 101 may perform an independent translational movement until it comes into contact with the surface of the preform 401, allowing all actuators 101 to follow the surface of the preform 401.

Once in position, the translation is locked, and a depression is activated through the vacuum hole 101-c of each actuator 101 to ensure the preform 401 is held in place.

In certain embodiments, it is possible to reactivate the translation of the actuators 101 during the manufacturing process to optimize the orientation of the preform 401 to comply with process limitations (firing gap, Rx target, etc.). This is particularly advantageous when printing a lens with a complex design. For this complex design reorienting the preform 401 during printing ensures a seamless connection between the near vision and far vision zones of the lens. This helps minimize optical aberrations in the intermediate zone. To avoid mechanical constraint applying to the preform 401 during the translation, one may deactivate the depression before translating the actuators 101 and resume the depression once the translation is realized.

In embodiments, a spatial position measurement step (x, y, z, theta, theta) of the surface of the preform 401 may be realized. The actuators 101 may be translated according to the measured spatial position.

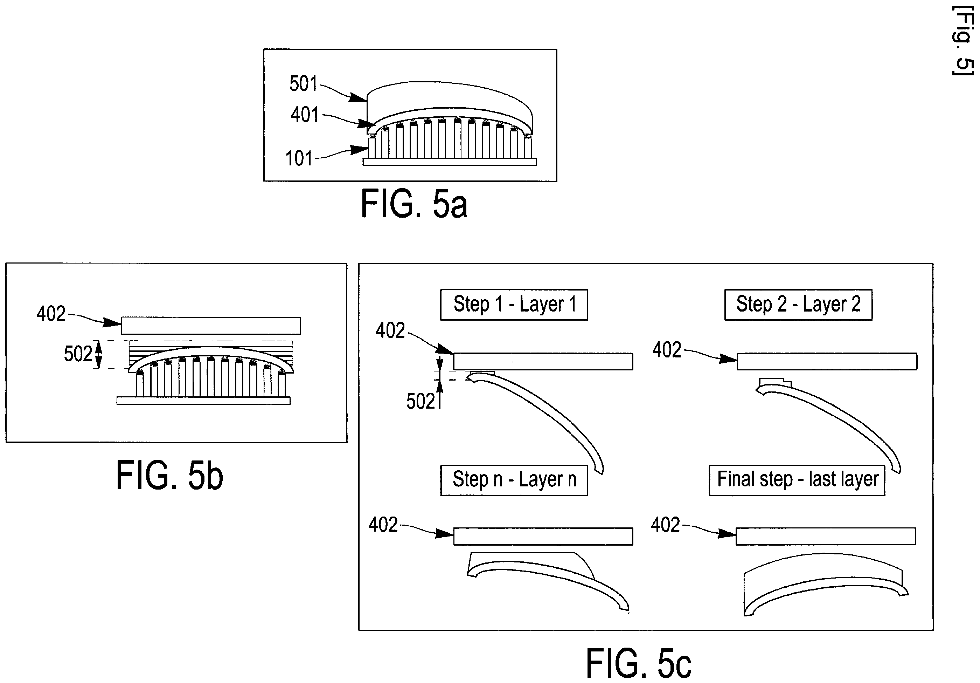

Figure 5-a to 5-c represent two ways of using the additive manufacturing system 100. Figure 5-a represents the object that needs to be manufactured. The object comprised the preform 401 and the complement 501. The preform 401 has been previously manufactured and the complement 501 will be manufactured using the additive manufacturing system of this disclosure.

Figure 5-b represents a first way of manufacturing the complement 501. In this first way the actuators 101 are moved to block the preform 401 and are immobile during the manufacturing of the complement 501. In this case a variable gap 502 may be present between the area over which a layer of the complement is manufactured and the manufacturing module 102.

Figure 5-c the orientation of the preform 401 is adapted to each layer of the complement 501. By adapted the orientation of the preform 401 the gap 502 may be almost constant.

In some embodiments, the orientation of the preform 401 may be adjusted during the manufacturing of the complement 501. The preform 401 may initially be oriented such that the manufacturing module 102 faces a central region of the preform 401, thereby enabling the formation of a first portion of the complement 501 on the central region. The preform 401 may then be reoriented such that the manufacturing module 102 faces a region adjacent to the central region, thereby enabling the formation of a second portion of the complement 501 on the adjacent region and optionally on the previously formed portion. The process of reorienting the preform and forming additional portions of the complement 501 is repeated until the manufacturing module 102 faces an edging region of the preform 401. The complement 501 is then further formed on the edging region and optionally on one or more previously formed portions.

In these embodiments, each subsequent region of the preform 401 that is addressed by the manufacturing module 102 may be located progressively farther from the center and toward the edging region. Thus, the complement 501 is formed in a direction extending from the center of the preform 401 toward its edge.

In some embodiments, the orientation of the preform 401 may be adjusted during the manufacturing of the complement 501. The preform 401 may initially be oriented such that the manufacturing module 102 faces an edging region of the preform 401, thereby enabling the formation of a first portion of the complement 501 on the edging region. The preform 401 may then be reoriented such that the manufacturing module 102 faces a region adjacent to the edging region, thereby enabling the formation of a second portion of the complement 501 on the adjacent region and optionally on the previously formed portion. The process of reorienting the preform and forming additional portions of the complement 501 is repeated until the manufacturing module 102 faces a central region of the preform 401. The complement 501 is then further formed on the central region and optionally on one or more previously formed portions.

In these embodiments, each subsequent region of the preform 401 that is addressed by the manufacturing module 102 may be located progressively closer to the center. Thus, the complement 501 is formed in a direction extending from the edge of the preform 401 toward its center.

## Claims

1. An additive manufacturing system (100) for manufacturing an object comprising a preform (401) and a complement (501), the additive manufacturing system (100) comprising:
• a plurality of actuators (101), the actuators (101) being configured to move so that the preform (401) is held by the actuators (101) during the manufacturing of the complement (501) and
• a manufacturing module (102) configured to create layers of the complement (501) starting from a surface of the preform (401).

2. The additive manufacturing system (100) according to the claim 1,
the surface of the preform (401) being a first surface,
for each actuator (101) an end of the actuator (101) is in contact with a second surface of the preform (401) and the end of the actuator (101) is configured to hold a part of the second surface of the preform (401) which is in the vicinity of the end of the actuator (101).

3. The additive manufacturing system (100) according to the claim 2,
the end of the actuators (101) comprising a seal (101-a) and the actuators (101) comprising a conduit (101-b), the seal (101-a) and the conduit (101-b) being configured together to generate a depression, the depression allowing the holding by the actuator (101) of the part of the second surface of the preform (401) in the vicinity of the end of the actuator (101).

4. The additive manufacturing system (100) according to the claim 2 or 3,
the system is configured to arrange the actuators (101) at different heights so that the actuators (101) can be adapted to conform to a shape of the second surface of the preform (401).

5. The additive manufacturing system (100) according to any of the claims 1 to 4, wherein the system is configured to arrange the actuators (101) to change an orientation of the preform (401) from a first orientation to a second orientation.

6. The additive manufacturing system (100) according to any one of the claims 1 to 5,
the actuators (101) being configured to move during the manufacturing of the complement (401), such as between the manufacturing of two successive layers of the complement (401).

7. The additive manufacturing system (100) according to claim 6,
wherein the system is configured to change, between the manufacturing of two successive layers of the complement (401), the orientation of the preform (401) relative to the manufacturing module (102) by moving the actuators (101), so as to present, at an appropriate distance from the manufacturing module (102), a new portion of the preform (401) and/or the complement (501) intended to receive at least one subsequent layer.

8. The additive manufacturing system (100) according to any one of the claims 1 to 7, wherein the actuators (101) being moved such that a distance between the manufacturing module (102) and a surface where the layer is created remains controlled, for example to respect a firing gap of the manufacturing module (102).

9. The additive manufacturing system (100) according to any one of the claims 1 to 8,
the manufacturing module (102) being configured to dispense droplets or voxels of a liquid material and to solidify the liquid material to form the layers of the object such as through a jetting head.

10. The additive manufacturing system (100) according to any one of claims 1 to 9,
the object being a lens,
the preform (401) being a preform lens,
the complement allowing a personalization of a correction of the preform lens to a wearer,
the additive manufacturing system (100) being configured to manufacture the lens.

11. Optical article, the optical article comprising a preform and a complement; the optical article being manufactured by:
• placing (301) the preform over actuators (101),
• adjusting (302) a position of the actuators (101) to hold the preform (401),
• creating (303) layers by layers the complement (501) over the preform (401).

12. Eyewear comprising an optical article, the optical article comprising a preform and a complement, the optical article being manufactured by:
• placing (301) the preform over actuators (101),
• adjusting (302) a position of the actuators (101) to hold the preform (401),
• creating (303) layers by layers the complement (501) over the preform (401).

13. Method for additively manufacturing an object formed of a preform (401) and a complement (501),
the method comprising:
• placing (301) a preform over actuators (101),
• adjusting (302) a position of the actuators (101) to hold the preform (401),
• creating (303) layers by layers the complement (501) over the preform (401).

14. The method according to the claim 13, wherein an orientation of the preform (401) is adjusted, by adjusting (302) the position of the actuators (101) during the manufacturing of the complement (501),
the method further comprising:
• orienting the preform (401) such that a manufacturing module (102) is positioned to manufacture a first portion of the complement (501) on a first region of the preform (401);
• forming, using the manufacturing module (102), the first portion of the complement (501) on the first region of the preform (401);
• adjusting the actuators (101) so as to change an orientation of the preform (401) such that the manufacturing module (102) is positioned to manufacture a second portion of the complement (501) on a second region of the preform (401), the second region of the preform (401) being either distinct from or at least partially overlapping the first region of the preform (401); and
• forming, using the manufacturing module (102), the second portion of the complement (501) on the second region and optionally on the first portion of the complement (501),
wherein the process of reorienting and forming is repeated until the complement (501) is formed over a target area of the preform.(401).

15. The method according to claim 14, wherein the first region of the preform (401) is a central region of the preform (401), and each subsequent region is progressively farther from the central region of the preform (401) and toward an edging region of the preform (401) or wherein the first region of the preform (401) is an edging region of the preform (401), and each subsequent region is progressively farther from the edge region of the preform (401) and toward a central region of the preform (401).
